Europäisches Patentamt

(19) European Patent Office

Office européen des brevets

(11) Veröffentlichungsnummer: **0 131 792**
**B1**

(12) **EUROPÄISCHE PATENTSCHRIFT**

(45) Veröffentlichungstag der Patentschrift:
09.03.88

(21) Anmeldenummer: 84107288.7

(22) Anmeldetag: 25.06.84

(51) Int. Cl.⁴: **F 28 F 11/06**, G 21 C 13/06

(54) Fernbedienbares Werkzeug zum Setzen von Stopfen in Wärmetauscherrohre.

(30) Priorität: 08.07.83 DE 3324777

(43) Veröffentlichungstag der Anmeldung:
23.01.85 Patentblatt 85/4

(45) Bekanntmachung des Hinweises auf die Patenterteilung:
09.03.88 Patentblatt 88/10

(84) Benannte Vertragsstaaten:
DE FR

(56) Entgegenhaltungen:
EP - A - 0 035 911
EP - A - 0 058 850
US - A - 3 863 976

(73) Patentinhaber: **Siemens Aktiengesellschaft Berlin und München, Wittelsbacherplatz 2, D-8000 München 2 (DE)**

(72) Erfinder: **Bieber, Oswald, Dipl.-Ing., Schulstrasse 5, D-8551 Heroldsbach (DE)**
Erfinder: **Haas, Erich, Steinweg 13, D-8566 Leinburg-Diepersdorf (DE)**
Erfinder: **Henglein, Rudolf, Eisenberg 6, D-8551 Pinzberg (DE)**
Erfinder: **Richter, Bernd, Dipl.-Ing., Oppelner Strasse 5, D-8520 Erlangen (DE)**

### Beschreibung

Die Erfindung betrifft ein fernbedienbares Werkzeug zum Setzen von aus zwei relativ zueinander beweglichen Teilen bestehenden Stopfen in Wärmetauscherrohre, insbesondere in nukleartechnischen Anlagen, mit einem Druckmittelantrieb zum Verspannen der Stopfenteile, der eine mit dem einen Stopfenteil verbindbare Stange und eine Hülse aufweist, die die Stange umgibt und mit einem Drehantrieb für eine Schraubbewegung verbunden ist, wobei die Stange mit dem Druckmittelantrieb verbunden ist und die Hülse mit dem Drehmittelantrieb einerseits und einer Mutter andererseits kuppelbar ist, die mit der Schraubbewegung der Spannposition der beiden Stopfenteile nachgeführt wird.Ein derartiges Werkzeug ist nach der EP-A 91 004, die am 12.10.83 veröffentlicht wurde und unter Artikel 54 (3) EP Ü fällt, bekannt.

Bei einem weiteren nach der CH-A 496 224 bekannten Werkzeug der obengenannten Art ist die Stange der Zugeinrichtung als Gewindespindel ausgebildet, die mit einem Zahnradpaar, dessen eines Zahnrad als Mutter auf der Spindel sitzt, über eine dem anderen Zahnrad zugeordnete Antriebsstange in Bewegung gesetzt wird. Die Spindel ist in einer Hülse geführt, die als Gegenhalter für den einen Teil des Stopfens dient. Das Verspannen ergibt eine plastische Verformung, die den Stopfen im Rohr festlegt. Danach soll die Reparaturstelle noch mit Hilfe eines Schweissaggregates dicht verschweisst werden.

In der EP-A 0 091 004 ist eine Rohrverschleisseinrichtung, insbesondere für Wärmetauscherrohre, mit einem Rohrstopfen beschrieben, der zur Erzeugung der abdichtenden Flächenpressung einen in seinem Aussendurchmesser vergrösserbaren Stopfenmantel und einen vom Stopfenmantel umgebenen Stopfenkern aufweist. Stopfenmantel und -kern sind relativ zueinander verschieblich, wodurch eine Aussendurchmesservergrösserung des Stopfenmantels erzeugbar ist. Das in das jeweilige Wärmetauscherrohr einfügbare Setzwerk für den Rohrstopfen besteht aus einer mit dem Stopfenkern lösbar verbundenen Stange aus einer am Stopfenmantel axial angreifenden, von der Stange durchdrungenen Stützhülse und aus Spannmitteln zur Erzeugung einer axialen Relativverschiebung zwischen Stange und Stützhülse und damit zwischen Stopfenmantel und -kern. Als Dichtelemente des Stopfenmantels dienen koaxiale zueinander angeordnete Stülpringe, die zwischen Stopfenmantel und -kern so gelagert sind, dass sie ausgehend von ihrer entspannten, kegelig eingestellten Form mit einem Aussendurchmesser, der kleiner oder höchstens gleich dem Rohrinnendurchmesser ist, durch Relativverschiebung zwischen Stopfenmantel und -kern in eine abgeflachte Form bringbar und in ihrem Aussendurchmesser vergrösserbar sind, so dass sie sich mit ihrem Aussenumfang um ein geringes Stück in die Rohrinnenwand dichtend eingraben. Bei dieser Ausführung sind als Spannmittel zwei seitlich der Stange angeordnete Hydraulikbzw. Pneumatikzylinder vorgesehen, die auch zum Ziehen des Rohrstopfens dienen können. Zwischen Stützhülse und Stange ist eine durch einen Servomotor drehbare Hülse angeordnet, die mit einer Mutter kuppelbar ist, welche durch die Drehbewegung der Spannposition der Stopfenteile nachgeführt wird. Dabei muss das Lösen der Stange vom Rohrstopfen von Hand vorgenommen werden. Bei dieser Ausführungsform ist das der Stange wirkungsmässig abgekehrte Ende des Linearantriebs mit einem Rohr verbunden, das die Hülse umgibt und sich bis zum Stopfen erstreckt. Das Rohr wirkt als Gegenhalter, so dass die Hülse zum Schrauben der Mutter ohne Längskräfte gedreht werden kann. Das ist besonders günstig bei Stopfen mit zwei konisch ineinander geschachtelten Teilen, von denen der eine den anderen gegen eine Federwirkung spreizt. Dieses bekannte Setzwerkzeug beansprucht jedoch einen relativ grossen Platz, was die Bedienung und Anwendung erschwert.

Die Erfindung geht von der Aufgabe aus, ein Werkzeug zu schaffen, das gestattet, den Platzbedarf des Werkzeuges zu verringern, so dass das Werkzeug auch bei eingeschränkten Platzverhältnissen, vorzugsweise durch Fernbedienung, ein- und ausgebaut werden kann.

Diese Aufgabe wird bei einem fernbedienten Werkzeug der eingangs genannten Art erfindungsgemäss dadurch gelöst, dass die Stange Vorsprünge aufweist, die zur Kupplung mit einem Zahnrad dienen, das mit der Hülse verbunden ist.

Die Hülse kann mit einer Feder am Linearantrieb abgestützt werden. Dies ermöglicht den Ausgleich von Toleranzen und damit eine Anpassung an unterschiedliche Längenverhältnisse, die durch die Bewegung der Stange und der Mutter zustande kommen.

Der Druckmittelantrieb, der bei kleinen Abmessungen grosse Kräfte aufbringt, kann vorteilhaft einseitig wirken und dabei eine Rückstellfeder spannen. Solche Antriebe sind zwar an sich bekannt, sie sind aber bei der Verwirklichung der Erfindung deshalb besonders günstig, weil mit dem Druckmittelantrieb durch die Höhe des Druckes eine begrenzte Kraft vorgegeben werden kann. Zugleich wird mit Hilfe der gespannten Rückstellfeder eine unabhängige Rückstellmöglichkeit geliefert.

An dem Druckmittelantrieb kann vorteilhaft der Drehantrieb befestigt sein, so dass sich ein kompakter Aufbau ergibt. Dabei wird die Festigkeit des Druckmittelantriebes, insbesondere seines Zylinders, für den Anbau des Drehantriebes ausgenutzt, der mit kleinen Abmessungen arbeiten kann.

Zur Anbringung des Werkzeuges kann für den Fall, dass zum Beispiel wegen grosser Radioaktivität eine Fernbetätigung gewünscht wird, eine Zahnstange dienen, die mit einem Zahnrad des Werkzeuges gekuppelt und mit Mitteln zur Befestigung an den Wärmetauscherrohren versehen ist. Eine solche Zahnstange, die vorzugsweise in Form eines Zahnriemens, also felxibel, ausgeführt ist, macht es möglich, das fernbedienbare Werkzeug an dem dem Wärmetauscher abgekehrten Ende der Zahnstange aufzusetzen, wo die Strahlenbelastung gering ist, und dann ohne Personaleinsatz zu den Wärmetauscherrohren zu bewegen. Mit flexiblen Zahnstangen in Form eines Zahnriemens kann man dabei noch unterschiedliche Wärmetauscherrohre ansteuern und sich auch unterschiedlichen Abmessungen von Wärmetauschern anpassen.

Zur nähren Erläuterung der Erfindung wird anhand der Zeichnung ein Ausführungsbeispiel beschrieben. Dabei zeigt Fig. 1 in einem vertikalen Teilschnitt den Einbau des Werkzeuges in einem Wärmetauscher. Die Fig. 2 zeigt Einzelheiten des für den Einbau verwendeten Zahnriemens. Die Fig. 3 zeigt in einem Vertikalschnitt den Linearantrieb des Werkzeuges, während die Fig. 4 in einem Teilschnitt den Drehantrieb des Werkzeuges darstellt.

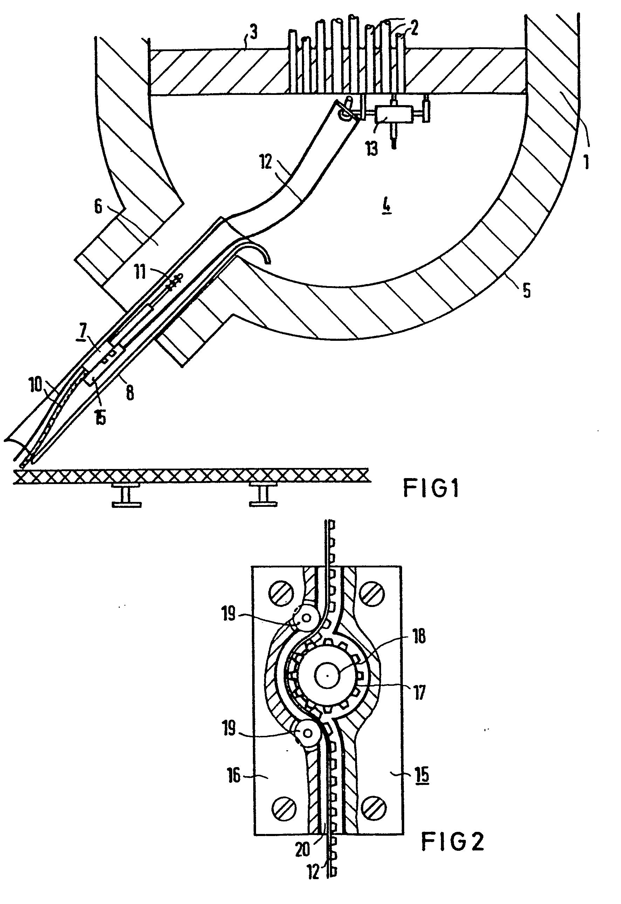

Der in Fig. 1 dargestellte Wärmetauscher 1 ist der Dampferzeuger eines Druckwasserreaktors. Von dem Rohrbündel des Wärmetauschers sind der Übersichtlichkeit halber nur die Rohre 2 im Mittelbereich dargestellt, wo sie in einem Rohrboden 3 eingeschweisst sind. Der Rohrboden begrenzt die Oberseite einer Primärkammer 4, deren Unterseite durch einen Kugelboden 5 abgeschlossen ist. In dem Kugelboden 5 ist ein Mannloch 6 vorgesehen, durch das das fernbedienbare Werkzeug 7 eingeführt werden kann. Beim Ausführungsbeispiel ist zur Erleichterung des Einführens eine Rutsche 8 vorgesehen.

Das Werkzeug 7 mit den Versorgungsleitungen 10 und dem Stopfen 11 wird mit Hilfe von zwei Zahnriemen 12 eingefahren, die an einem Manipulator 13 am Rohrboden 3 befestigt sind. Die Zahnriemen haben eine Länge von zum Beispiel 6 m. Sie gehören zu einer Aufzugseinrichtung 15 mit zwei Antriebseinheiten, die Elektromotor, Getriebe und Riemenführung umfassen. Eine solche Antriebseinheit ist in Fig. 2 dargestellt. Man erkennt ein Gehäuse 16 mit einem Zahnrad 17 auf einer Achse 18, die von einem nicht weiter dargestellten Elektromotor betätigt wird. Das Zahnrad 17 wird über etwa die Hälfte seines Umfanges von einem der Zahnriemen 12 umschlungen, der zu diesem Zweck mit Rollen 19 durch einen Schlitz 20 des Gehäuses geführt ist. Je nach der Drehung des Zahnrades 18 wandert die Aufzugseinrichtung 15 in der einen oder anderen Richtung an den Zahnriemen 12 entlang. Damit kann von der Aufzugseinrichtung das Werkzeug 7 gegen den Rohrboden geführt werden, ohne dass ein unmittelbarer Personaleinsatz in dem strahlengefährdeten Bereich in der Primärkammer 4 erforderlich ist.

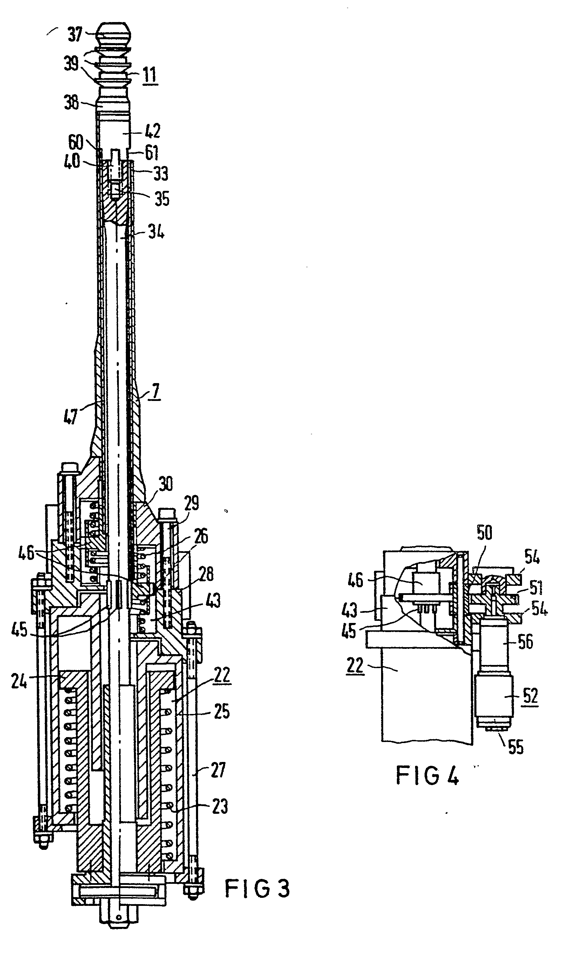

Das Werkzeug 7 umfasst, wie in Fig. 3 dargestellt ist, als Linearantrieb einen Druckmittelantrieb 22, der in der in der Fig. 3 auf der linken Seite in der mit dem Druckmittel beaufschlagten Stellung, auf der rechten Seite in der drucklosen Stellung, gezeichnet ist, in die er unter der Wirkung einer Rückstellfeder 23 gelangt.

Zum Druckmittelantrieb 22 gehört ein stationärer Hohlkolben 24. Er sitzt in einem Mantel 25, der mit Spannschrauben 27 gegen ein Kopfstück 28 verspannt ist, so dass ein den Hohlkolben 24 einschliessender beweglicher Zylinder entsteht. Das Kopfstück 28 ist mit Schrauben 29 mit einem Druckkörper 30 verbunden, an dem ein Druckrohr 33 angebracht ist.

Das Druckrohr 33 umschliesst eine Stange 34, die im Hohlkolben 24 drehbar befestigt ist. Die Stange 34 weist an ihrem den Antrieb 24 abgekehrten Ende eine Gewindebohrung 35 zum Einschrauben des Stopfens 11 auf. Der Stopfen 11 umfasst zwei relativ zueinander bewegliche Teile 37 und 38 auf, zwischen denen als Dichtungsscheiben 39 konische Tellerfedern angeordnet sind, wie in EP-A 91 004 angegeben ist. Auf dem mit dem einen Teil 38 verbundenen Gewindezapfen 40 sitzt ferner eine Mutter 42.

Die Stange 34 besitzt im Bereich des Kopfstükkes 28 und des Druckkörpers 30, die gemeinsam ein Kupplungsgehäuse 43 bilden, Vorsprünge 45. Sie dienen zur Kupplung mit einem Zahnrad 46, das im Inneren des Kupplungsgehäuses 43 zwischen zwei Federn 26 so befestigt ist, dass es auf der Stange 34 gleitet. Das Zahnrad 46 ist mit einer Hülse 47 verbunden, die die Stange 34 umgibt und drehbar zwischen der Stange 34 und dem Druckrohr 33 angeordnet ist.

Die Fig. 4 zeigt, dass die Mutter 46 im Kupplungsgehäuse 43 über ein Ritzel 50 mit dem Zahnrad 51 eines Drehantriebes 52 in Eingriff steht, der mit einer Halterung 54 am Kupplungsgehäuse 43 befestigt ist. Der Drehantrieb 52 umfasst einen Elektromotor 55 und ein Getriebe 56, von dem das Zahnrad 51 betätigt wird.

Die Fig. 4 zeigt das Zahnrad 46 in einer Stellung, in der es entsprechend der rechten Seite der Fig. 3 mit den Vorsprüngen 45 in Verbindung steht, die in entsprechende Nuten einer Bohrung des Zahnrades 46 greifen. Somit ist die Stange 34 mit dem Drehantrieb 52 gekuppelt, so dass eine Drehung des Antriebes 52 zu einer Drehung der Stange 34 führt, mit der die Gewindebohrung 35 der Stange 34 und der Gewindezapfen 40 des Stopfens 11 je nach Drehrichtung des Drehantriebes 52 miteinander verbunden oder voneinander gelöst werden können.

In der in Fig. 3 auf der linken Seite dargestellten Stellung der Stange 34 gegenüber dem Druckrohr 33, die der durch das Druckmittel entgegen der Feder 23 bewirkten Endstellung des Linearantriebes 22 entspricht, ist der Stopfen 11 in der Spannposition. Seine Dichtungsscheiben 39 sind nach aussen gespreizt und graben sich in die Innenseite des zu verschliessenden Rohres 2, wie in der Fig. 3 allerdings nicht weiter dargestellt ist. Gleichzeitig steht die Hülse 47 mit der Mutter 42 in Eingriff, weil sie mit ihrem oberen, als Polygon ausgebildeten Ende 60 auf einen entsprechend polygonalen unteren Abschnitt 61 der Mutter 42 greift. Deshalb kann in dieser Stellung die Mutter 42 durch eine Drehung der Hülse mit Hilfe des Drehantriebes 52 auf dem Gewindestopfen 40 verstellt werden. Daraus ergibt sich folgende Wirkungsweise beim Laden des Setzwerkzeuges und

**Setzen des Dichtstopfens:**

**1. Laden des Setzwerkzeuges**

Mit der Sicherungsmutter 42 werden die Stopfenteile 37, 38 spielfrei aneinandergelegt. Dann wird der Dichtstopfen 11 mit dem Drehantrieb 52 motorisch in die Spannstange 34 des Setzwerkzeuges 7 eingeschraubt, bis die Mutter 42 anliegt.

In dieser Ladestellung ist der Linearmotor drucklos; der Hohlkolben 24 ist eingefahren, die inneren Keilprofile des Zahnrades 46 und die Vorsprünge 45 der Spannstange 34 befinden sich im Eingriff.

Anschliessend wird der Mantel 25 des Linearmotors 24 solange mit Druck beaufschlagt, bis das Druckrohr 33 gerade noch nicht an der unteren Stützscheibe 38 des Dichtstopfens 11 anliegt. Durch gleichzeitiges Drehen der Hülse 47 wird sichergestellt, dass unter der Wirkung der Federn 26 dessen Klauen bzw. Polygon 60 in die Aussparungen der Mutter 42 einrasten.

**2. Setzen des Dichtstopfens**

Der Dichtstopfen 11 wird mittels des Setzwerkzeuges 7 entweder manuell oder ferngesteuert auf Stopfensetzhöhe in das zu verschliessende Heizrohr 2 eingebracht.

Daran anschliessend wird der Linearmotor 22 kontinuierlich mit Druck beaufschlagt, bis der Spanndruck erreicht ist, bei dem die Stopfenteile die Spannposition erreichen.

Unmittelbar darauffolgend, nämlich programmgesteuert automatisch, wird die selbstsichernde Mutter 42 am Dichtstopfen 11 mit dem Drehantrieb 52 über die Hülse 47 nachgedreht.

Über einen am Zwischengetriebe 56 angekuppelten Encoder wird der Weg der Mutter bis zum Anliegen an der unteren Stützscheibe 38 gemessen und an einem Steuerkasten angezeigt.

Kontinuierliches Herabsetzen des Druckes auf den Hohl-Druckmittelantrieb 22 mit dem Hohlkolben 24 bewirkt ein Absenken des Druckkörpers 30 und des daran gelagerten Drehantriebes 52; die Keilprofile 45 auf der Spannstange 34 und im Zahnrad 46 gelangen in Eingriff. Mit dem Drehantrieb 52 können nunmehr Dichtstopfen 11 und Setzwerkzeug 7 entkuppelt werden.

Der Spannvorgang des Stopfens 11 und das Entkuppeln des gesetzten Stopfens 11 vom Werkzeug 7 wird durch eine elektronische Steuerung vorgenommen und überwacht. Zu diesem Zweck ist das Werkzeug 7 mit einer Anzahl nicht weiter dargestellter Annäherungssensoren versehen, die auf induktiver, kapazitiver oder magnetischer Basis, gegebenenfalls auch optisch oder mit Ultraschall oder dergleichen die Relativlage zwischen der Spannstange 34 und dem Druckrohr 33 sowie die Relativlage zwischen der Hülse 47 mit dem Zahnrad 46 und dem Kupplungsgehäuse 43 erfassen.

**Patentansprüche**

1. Fernbedienbares Werkzeug zum Setzen von aus zwei relativ zueinander beweglichen Teilen bestehenden Stopfen (11) in Wärmetauscherrohre, insbesondere in nukleartechnischen Anlagen, mit einem Druckmittelantrieb zum Verspannen der Stopfenteile, der eine mit dem einen Stopfenteil verbindbare Stange (34) und eine Hülse (47) aufweist, die die Stange (34) umgibt und mit einem Drehantrieb (52) für eine Schraubbewegung verbunden ist, wobei die Stange (34) mit dem Druckmittelantrieb (22) verbunden ist und die Hülse (47) mit dem Drehantrieb (52) einerseits und einer Mutter (42) andererseits kuppelbar ist, die mit der Schraubbewegung der Spannposition der beiden Stopfenteile (37, 38) nachgeführt wird, dadurch gekennzeichnet, dass die Stange (34) Vorsprünge (45) aufweist, die zur Kupplung mit einem Zahnrad (46) dienen, das mit der Hülse (47) verbunden ist.

2. Fernbedienbares Werkzeug nach Anspruch 1, dadurch gekennzeichnet, dass die Stange (34) sich durch den Druckmittelantrieb (22) erstreckt.

3. Fernbedienbares Werkzeug nach Anspruch 2, dadurch gekennzeichnet, dass die Hülse (47) mit einer Feder (26) am Druckmittelantrieb (22) abgestützt ist.

4. Fernbedienbares Werkzeug nach einem der Ansprüche 1 bis 3, dadurch gekennzeichnet, dass der Druckmittelantrieb (22) einseitig wirkt und dabei eine Rückstellfeder (23) spannt.

5. Fernbedienbares Werkzeug nach einem der Ansprüche 1 bis 4, dadurch gekennzeichnet, dass der Drehantrieb (52) an dem Druckmittelantrieb (22) befestigt ist.

6. Fernbedienbares Werkzeug nach einem der Ansprüche 1 bis 5, gekennzeichnet durch eine Zahnstange (12), insbesondere in Form eines Zahnriemens, die mit einem Zahnrad (18) des Werkzeuges (7) gekuppelt und mit Mitteln zur Befestigung an den Wärmetauscherrohren (2) versehen ist.

**Claims**

1. A remotely operable tool for the insertion of plugs (11) consisting of two relatively movable parts into heat-exchange tubes, particularly in nuclear installations, with a pressure medium drive for bracing the parts of the stopper, which drive has a rod (34) which can be connected with one part of the stopper, and a sleeve (47), which surrounds the rod (34) and is connected with a rotary drive (52) for a screw movement, wherby the rod (34) is connected with the pressure medium drive (22) and the sleeve (47) can be coupled with the rotary drive (52) at one end and with a nut (42) at the other end, which is moved to the tightened position of the two parts of the stopper (37, 38) by the screw movement, characterised in that the rod (34) has projections (45), which serve for coupling a toothed wheel connected to the sleeve (47).

2. A remotely operable tool as claimed in claim 1, characterised in that the rod (34) is extended by means of the pressure medium drive (22).

3. A remotely operable tool as claimed in claim 2, characterised in that the sleeve (47) is supported on the pressure medium drive (22) by a spring (26).

4. A remotely operable tool as claimed in one of the claims 1 to 3, characterised in that the pressure medium drive (22) works unilaterally and thereby tightens a return spring (23).

5. A remotely operable tool as claimed in on of the claims 1 to 4, characterised in that the rotary drive (52) is mounted on the pressure medium drive (22).

6. A remotely operable tool as claimed in one of the claims 1 to 5, characterised by a toothed rack, particularly in the form of a toothed belt (12), which is coupled with a cog-wheel (18) of the tool (7) and is provided with means to fasten it onto the heat-exchange tubes (2).

**Revendications**

1. Outil à télémanipulation pour la mise en place de bouchons (11), constitués en deux éléments mobiles relativement l'un par rapport à l'autre, dans des tubes d'échangeurs de chaleur, en particulier dans des installations du génie nucléaire, avec une commande à milieu sous pression pour serrer entre eux les éléments du bouchon, ladite commande comportant une tige (34) susceptible d'être reliée à un premier élément du bouchon, ainsi qu'une douille (47) qui entoure la tige (34), et avec un dispositif d'entraînement en rotation (52) pour l'exécution d'un mouvement de vissage, du type dans lequel la tige (34) est reliée à la commande à milieu sous pression (22), alors que la douille (47) est susceptible d'être accouplée d'une part avec le dispositif d'entraînement en rotation (52) et, d'autre part, avec un écrou dont le déplacement de poursuite est asservi, avec le déplacement de vissage, à la position de serrage des deux éléments (37, 38) du bouchon, caractérisé par le fait que la tige (34) comporte des parties saillantes (45) qui servent à l'accouplement avec une roue dentée (46) qui est reliée à la douille (47).

2. Outil à télémanipulation selon la revendication 1, caractérisé par le fait que la tige (34) s'étend à travers la commande à milieu sous pression (22).

3. Outil à télémanipulation selon la revendication 2, caractérisé par le fait que la douille (47) prend appui, à l'aide d'un ressort (26), contre la commande à milieu sous pression (22).

4. Outil à télémanipulation selon l'une des revendications 1 à 3, caractérisé par le fait que la commande à milieu sous pression (22) agit de façon unilatérale et arme, ce faisant, un ressort de rappel (23).

5. Outil à télémanipulation selon l'une des revendications 1 à 4, caractérisé par le fait que le dispositif d'entraînement en rotation (52) est fixé à la commande à milieu sous pression (22).

6. Outil à télémanipulation selon l'une des revendications 1 à 5, caractérisé par une crémaillère, en particulier sous la forme d'une courroie dentée (12) qui est accouplée avec une roue dentée (17) de l'outil (7) et qui est pourvue de moyens pour la fixation aux tuyaux de l'échangeur de chaleur (2).

FIG1

FIG 2

FIG 3

FIG 4